(19) **Europäisches Patentamt / European Patent Office / Office européen des brevets**

(11) **EP 3 211 787 A1**

(12) **EUROPEAN PATENT APPLICATION**

(43) Date of publication:
**30.08.2017 Bulletin 2017/35**

(51) Int Cl.:
***H02P 6/10*** $^{(2006.01)}$

(21) Application number: **16156872.0**

(22) Date of filing: **23.02.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ABB Technology Oy**
**00380 Helsinki (FI)**

(72) Inventor: **Sinervo, Anssi**
**00380 Helsinki (FI)**

(74) Representative: **Kolster Oy Ab**
**Salmisaarenaukio 1**
**00180 Helsinki (FI)**

(54) **METHOD AND APPARATUS FOR CONTROLLING RADIAL FORCE OF ROTOR IN FOUR-POLE ELECTRIC MACHINE**

(57) The present disclosure describes a method and an inverter system for controlling a radial force of a rotor of a three-phase electric machine comprising four-pole stator windings with two separately-supplied, three-phase winding portions that are electrically in a two-fold rotational symmetry. The method and the inverter system control the rotation of the rotor with a four-pole main magnetic flux component generated to the four-pole stator windings and the radial force of the rotor with a two-pole auxiliary magnetic flux component generated to the four-pole stator windings. The four-pole main magnetic flux is generated by controlling voltages supplied to the three-phase winding portions, and the auxiliary magnetic flux component is generated by controlling a voltage difference between the voltages supplied to the three-phase winding portions.

Figure 9

**Description**

FIELD OF THE INVENTION

The present disclosure relates to electric machines, and more particularly to controlling a radial force of a rotor in a four-pole electric machine.

BACKGROUND INFORMATION

In an electric machine, spatial density harmonic components of a magnetic flux with subsequent numbers of pole pairs generate a radial force to the rotor of the machine. The consecutive harmonic components induce an asymmetric magnetic flux which generates a magnetic pull to the rotor [1]. The relation between the magnetic pull and pairs of consecutive harmonic components can be defined as follows:

$$F_e = C_F \left( \sum_{n=1}^{\infty} \underline{\hat{B}}_n^* \underline{\hat{B}}_{n+1} \right), \quad (1)$$

where $C_F$ is a constant, $\underline{\hat{B}}$ is a spatial density harmonic component with the subscript indicating the harmonic number. * refers to a complex conjugate of a component.

The force $F_e$ in Equation (1) is given in complex coordinates where the real and imaginary parts denote directions perpendicular to each other. In order to correctly present the direction of the force, the spatial harmonic components of the air gap flux density in Equation (1) may be defined as space vectors, which are typically used for currents and voltages. For example, a spatial harmonic component $\underline{\hat{B}}$ of harmonic number n may be written as a function of time $t$ as follows:

$$\underline{\hat{B}}_n(t) = \hat{B}_n(t) e^{i\varphi_n(t)}, \quad (2)$$

where $\hat{B}_n$ is the magnitude of the harmonic component, $\varphi_n$ is the cylindrical angle coordinate of the harmonic component. The air gap flux density may be written as a function of the cylindrical angle $\varphi$ and time $t$ as follows:

$$\overline{\mathbf{B}}(\varphi, t) = \sum_n \hat{B}_n(t) \cos(n\varphi - \varphi_n(t)) \hat{\mathbf{e}}_r(\varphi), \quad (3)$$

where $\hat{\mathbf{e}}_r(\varphi)$ is a unit vector in radial direction as a function of the cylindrical angle $\varphi$. The magnetic pull $\overline{\mathbf{F}}_e$ may then be calculated as a function of time $t$ as follows:

$$\overline{\mathbf{F}}_e(t) = \frac{D_\delta l_r}{4\mu_0} \int_0^{2\pi} \left| \overline{\mathbf{B}}(\varphi, t) \right|^2 \hat{\mathbf{e}}_r(\varphi) d\varphi, \quad (4)$$

where $D_\delta$ is the air gap diameter, and $l_r$ rotor core length.

This magnetic pull manifests itself as a radial force acting on the rotor. The radial force may be used for minimizing undesired eccentricity of the rotational axis of the rotor, for example. The radial force may be used for levitating the rotor, or even in forming a bearingless electric machine. Even when mechanical/active magnetic bearings are present in the electric machine, the generated radial force maybe utilized in minimizing vibrations induced by bending of the rotor axis and/or minimizing the effect of gravity to the bearings.

Typically, an electrical machine has a set of stator windings with a number of pole pairs. The windings generate one main magnetic flux spatial harmonic component which is used to control the torque, for example. However, if the stator is fitted with two sets of windings with different numbers of pole pairs, e.g., two- and four-pole windings, one of the windings can be used to control the torque and rotation and the other to control the radial force on the rotor [2]. In order to produce a magnetic pull and, thus, a radial force, the pole pair numbers must be consecutive. For example, two- and six-pole windings do not produce a radial force. With separate windings for each magnetic flux component, the magnetic flux in each winding can be controlled separately, which may reduce the complexity of the control scheme. However, one of the sets of windings does not participate in producing torque. Thus, when generating a radial force is not required, one of the windings is left unused.

There are approaches that use the same idea of two spatial flux density harmonics in the air gap but do not have two separate stator windings. Salazar and Stephan [3] also used a four-pole machine and split one of the phases in such way that each pole of that phase could be supplied separately. Khoo *et al.* [4] presented a four-pole machine with controllable bridge connections between the parallel branches that were used to create two-pole flux in the air gap. Both of these methods have the advantage that all stator windings can be used to produce torque if radial force control is not needed but they do set a limitation on how the stator is wound. However, both of these approaches require additional power supplies in order to operate. Since the additional power supplies operate at a constantly changing voltage potential, implementation of the power supplies may increase the complexity of the system and may, thus, reduce the cost-effectiveness of the system.

BRIEF DISCLOSURE

An object of the present invention is to provide a method and an apparatus for implementing the method so as to alleviate the above disadvantages. The objects of the invention are achieved by a method and an apparatus which are characterized by what is stated in the independent claims. Preferred embodiments of the invention are disclosed in the dependent claims.

In a four-pole electric machine, a radial force may be generated to a rotor of the machine, if the stator windings of the machine are divided into two separately supplied three-phase portions. The rotation/torque of the rotor may be controlled with a four-pole main magnetic flux component generated by the stator windings. In addition, a two-pole auxiliary magnetic flux component may be induced to the stator winding by generating a voltage difference between the voltages supplied to the two portions of windings. The two winding portions may be supplied separately with a six-phase inverter or two three-phase inverters, for example.

With a method and apparatus according to the present disclosure, all stator windings can be utilized for producing torque. Further, the implementation is simple and requires no additional power supplies.

BRIEF DESCRIPTION OF THE DRAWINGS

In the following the invention will be described in greater detail by means of preferred embodiments with reference to the attached drawings, in which

Figures 1, 2A to 2B, and 3A to 3B show simplified diagrams of an exemplary stator of a three-phase, four-pole electric machine according to the present disclosure;
Figures 4, 5, and 6 show a simplified diagram of another exemplary stator of a three-phase, four-pole electric machine according to the present disclosure;
Figure 7 shows an exemplary simplified circuit diagram of a known four-pole electric machine winding configuration;
Figure 8 shows an exemplary simplified circuit diagram of a four-pole electric machine according to the present disclosure; and
Figure 9 shows a simplified block diagram of an exemplary arrangement according to the present disclosure, where the inverter system comprises two three-phase inverters.

DETAILED DISCLOSURE

The present disclosure presents a method for controlling a radial force of a rotor in a three-phase electric machine comprising four-pole stator windings with two separately supplied, three-phase winding portions. The two portions may be arranged such that they are electrically in a two-fold rotational symmetry, i.e. one portion electrically corresponds to the other if rotated (about the centre axis of the stator) by 180 degrees. In this context, the portions may be considered electrically corresponding when they generate (essentially) matching spatial magnetic fluxes when supplied with the same voltage. The windings forming the two portions may be physically arranged into a two-fold rotational symmetry, for example.

Both of the two winding portions may be considered to create a portion of the magnetic flux present in the stator. Together they complete the magnetic flux. When the two separately supplied portions of the stator windings are supplied with the same three-phase voltage, they together create a four-pole magnetic flux. In this context, the term "four-pole magnetic flux" or "four-pole magnetic flux component" refer to a four-pole spatial density harmonic component of a magnetic flux. However, if the winding portions are supplied with different voltages (i.e. three-phase voltages supplied to the portions have a differential voltage term between each other) the differential voltage term between the different supply voltages generates a two-pole magnetic flux component. In this context, the term "two-pole magnetic flux" or "two-pole magnetic flux component" refer to a two-pole spatial density harmonic component of a magnetic flux.

In a method according to the present disclosure, the rotation of the rotor may be controlled with a four-pole magnetic flux component (i.e. main flux component) generated to the four-pole stator windings, and the radial force of the rotor may be controlled with a two-pole magnetic flux component (i.e. auxiliary flux component) generated to the four-pole stator windings. The main magnetic flux may be generated by controlling voltages supplied to the three-phase winding portions, and the auxiliary magnetic flux component may be generated by controlling a voltage difference between the voltages supplied to the three-phase winding portions. The supply of the electric machine can be considered to be formed on the basis of two voltage terms: a common voltage term between the voltages supplied to the two separately supplied winding portions of the stator, and a differential voltage term between the voltages supplied to the portions. The common voltage term induces the four-pole magnetic flux component and the differential voltage term induces the two-pole magnetic flux term.

By controlling the differential voltage term, the magnitude and angle of the two-pole magnetic flux component (i.e. the auxiliary flux component) with respect to the four-pole magnetic flux component (i.e. the main flux component) can be controlled. In this manner, the radial force can be controlled. If the four-pole magnetic flux component has a significantly higher magnitude than the two-pole magnetic flux component, any disturbance in the four-pole flux component induced by changes in the two-pole magnetic component can be considered negligible. Thus, any effects the control of the radial force may have on the control of rotation of the rotor can be kept minimal. The ratio between the four-pole magnetic flux and two-pole magnetic flux may be around 100:1, for example.

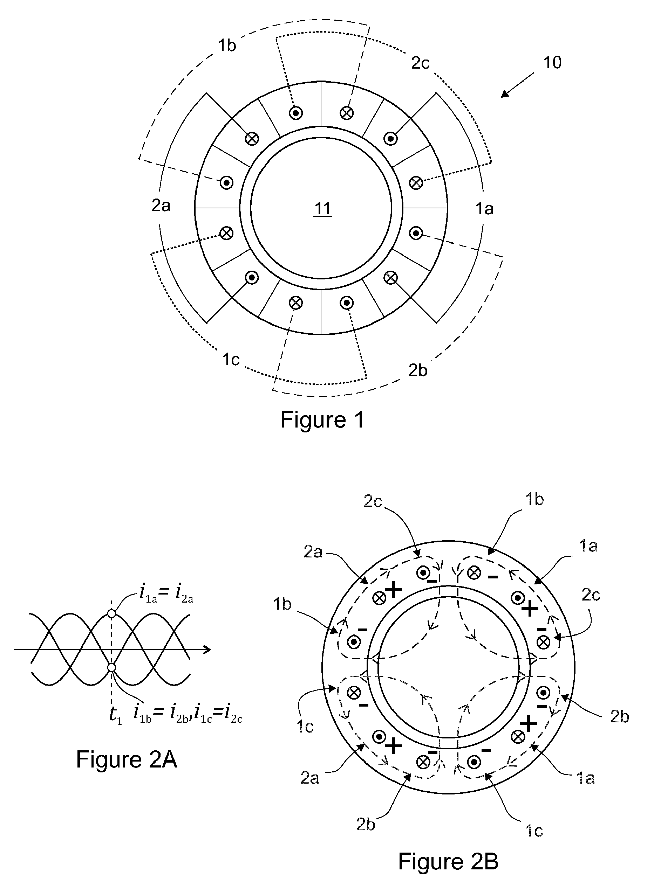

Figures 1, 2A, 2B, 3A, and 3B show simplified diagrams of an exemplary stator of a three-phase, four-pole electric machine according to the present disclosure. Figure 1 shows a cross-section of the stator 10. A rotor 11 is shown inside the stator 10. The plane of the cross section is perpendicular to the centre axis of the stator. The stator windings have two three-phase portions. In Figure 1, a first portion of the stator windings comprises phases 1a, 1b, and 1c, and a second portion of the windings comprises phases 2a, 2b, and 2c. The stator windings in the cross-section are shown in a simplified manner as single conductors. Each phase (of each three-phase portion) has two oppositely-oriented conductors in the stator 10 of Figure 1. The orientation of a conductor in a phase, i.e. the direction of current flowing through the conductor when a positive voltage is applied to the phase, is shown with a cross or a dot in the cross-section of the conductor. A cross in the conductor cross-section denotes a flow of current away from the viewer, whereas a dot in the conductor cross-section denotes current flowing towards the viewer. Although the windings are shown as single conductors in Figure 1, the windings may have a plurality of turns. Thus, in this context, the term "conductor" may also be regarded as "one or more concurrent conductors".

In Figure 1, the first and second portion of the stator windings are arranged into an electrical two-fold rotational symmetry. Conductors in corresponding phases of the two portions are physically arranged into a two-fold rotational symmetry. A conductor in a phase of one portion of a three-phase winding has a corresponding conductor, i.e. a conductor having the same orientation, in the corresponding phase of the other portion of the winding on the opposite side of the centre axis of the stator. For example, phases 1a and 2a in Figure 1 have a two-fold rotational symmetry between them. This also applies to the other phases. During operation, each of the two portions of the three-phase windings can be considered to create a portion of the main magnetic flux. Together these portions complete the main magnetic flux in the stator. When the two portions of the stator windings are supplied with the same three-phase voltage, they generate a four-pole magnetic flux. If the portions were supplied with opposite voltages, a two-pole magnetic flux would be generated.

Figures 2A and 2B visualize a simplified, exemplary four-pole magnetic flux component being induced to the windings of the stator of the exemplary four-pole electric machine of Figure 1. The first portion and the second portion are supplied with the same three-phase voltage in Figures 2A and 2B. Currents flowing through the phase windings 1a and 2a are peaking. Figure 2A shows the phase currents $i_{1a}$ and $i_{2a}$ of the phase windings 1a and 2a peaking at time instant $t_1$. Since the first and second winding portion are supplied with three-phase currents, negative currents with half the magnitude of the currents of phases 1a and 2a flow through the phase windings 1b and 2b and the phase windings 1c and 2c. Figure 2A shows the negative phase currents $i_{1b}$ and $i_{2b}$ of the phase windings 1b and 2b and the negative phase currents $i_{1c}$ and $i_{2c}$ of phase windings 1c and 2c at instant $t_1$.

Because of the different-signed phase currents and the orientation of the conductors of the phase windings, groups of windings are formed with current physically flowing in the same direction. Figure 2B shows four groups generated at time instant $t_1$. For example, the conductor of the phase winding 2a in the top left corner of Figure 2B carries a positive current away from the viewer. The adjacent conductors of the phase windings 1b and 2c are oriented in the opposite direction, but since their phase currents are negative, as shown in Figure 2A, the current flows away from the viewer as in the conductor of the phase winding 2a.

The four groups of conductors with aligned currents form the four poles of the main magnetic flux. The induced four-pole main magnetic flux component is shown with a dashed line in Figure 2B. The poles of the four-pole magnetic flux are centered on the conductors of the windings 1a and 2a in Figure 2B.

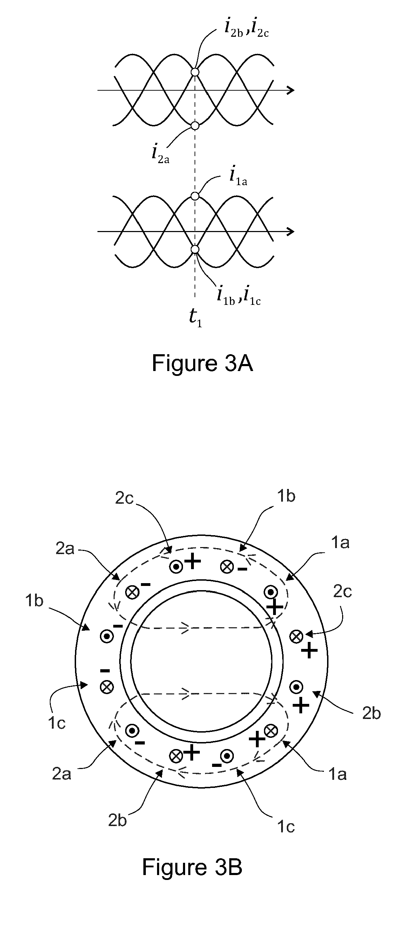

Figure 3A and 3B illustrate a simplified, exemplary two-pole magnetic flux component being induced to the windings of the stator of the exemplary four-pole electric machine of Figure 1. The first portion and the second portion are supplied with opposite three-phase voltages, as shown in Figure 3A. In the first winding portion, a positive current flowing through the phase winding 1a is peaking, and negative currents with half the magnitude of the currents of the phase winding 1a flow through the phase windings 1b and 1c. An opposite three-phase voltage is supplied to the second portion. Positive currents with half the magnitude of the negative current of the phase 2a flow through the phase windings 2b and 2c. The induced two-pole auxiliary magnetic flux component is shown with a dashed line in Figure 3B.

If the two-pole magnetic flux component (i.e. the auxiliary magnetic flux) of Figure 3B was added to the four-pole magnetic flux component (i.e. the main magnetic flux component) of Figure 2B, the two-pole magnetic flux component would strengthen the two right-most poles of the four-pole flux and weaken the two left-most poles of the four-pole flux of Figure 2B. This would cause the total magnetic flux to be asymmetric which, in turn, would induce a radial force in the form of a magnetic pull. Figures 2B and 3B show magnetic flux components generated at certain currents. However, desired magnetic flux components can be arbitrarily selected and generated independently from each other.

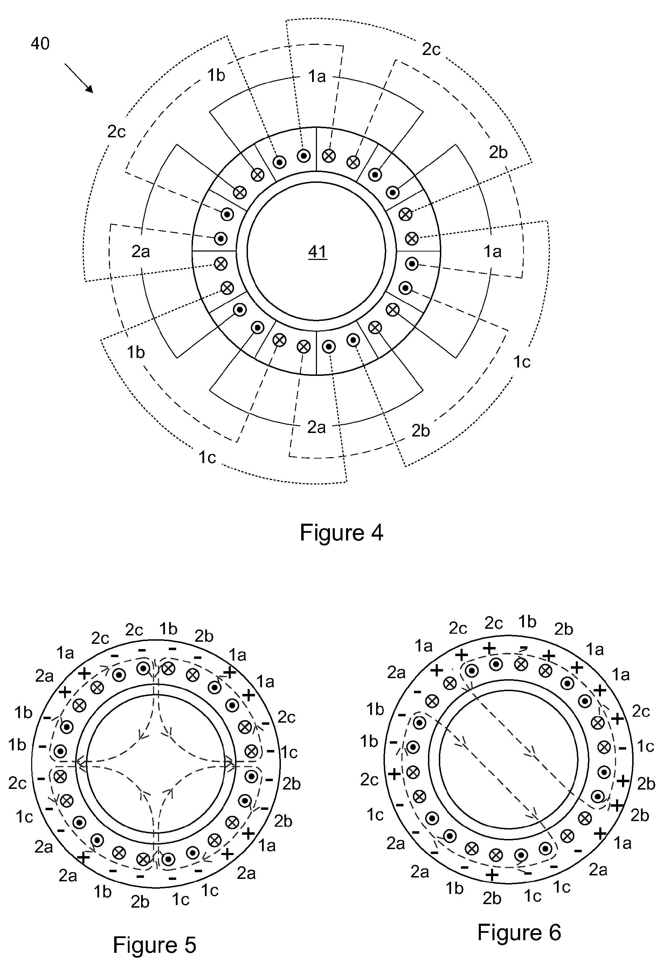

Figures 4, 5, and 6 show a simplified diagram of another exemplary stator of a three-phase, four-pole electric machine according to the present disclosure. Figure 4 shows a cross-section of the stator 40 and a rotor 41 inside the stator 40. The stator windings in the cross-section are shown in the same manner as in Figures 1. The stator windings have a first three-phase portion and a second three-phase portion. Each phase (both three-phase portions) has two pairs of oppositely-oriented conductors in Figure 4. The two three-phase portions of the stator windings are arranged into an electrical two-fold rotational symmetry. For example, the phase 1a of the first portion and the phase 2a of the second portion have a two-fold rotational symmetry with respect to each other. In Figure 4, phases 1a and 2a have a conductor with matching orientations on the opposite sides of the stator. This applies to the other phases of the first and second portions of the stator winding. When the two portions are supplied with the same three-phase voltage, they generate a four-pole magnetic flux. If the portions were supplied with opposite voltages, a two-pole magnetic flux would be generated.

Figure 5 illustrates a simplified, exemplary four-pole magnetic flux component induced to the windings of the stator of the exemplary four-pole electric machine of Figure 4. The first portion and the second portion are supplied with the same three-phase voltages. Currents flowing through the phase windings 1a and 2a are peaking. The induced four-pole main magnetic flux component is shown with a dashed line in Figure 5.

Figure 6 illustrates a simplified, exemplary two-pole magnetic flux component induced by the windings of the stator of the exemplary four-pole electric machine of Figure 4. The first portion and the second portion are supplied with opposite three-phase voltages in Figure 6. Currents flowing through the phase windings 1a and 2a are peaking. The induced two-pole auxiliary magnetic flux component is shown with a dashed line in Figure 6.

In Figures 1 and 4, the windings of the two three-phase portions are physically arranged into a two-fold rotational symmetry. However, a method and apparatus according to the present disclosure are not only limited to two portions with a physical two-fold rotational symmetry. Even when the three-phase portions are not physically in a two-fold rotational symmetry, a method and an apparatus according to the present disclosure may be used if the two portions are electrically in a two-fold rotational symmetry.

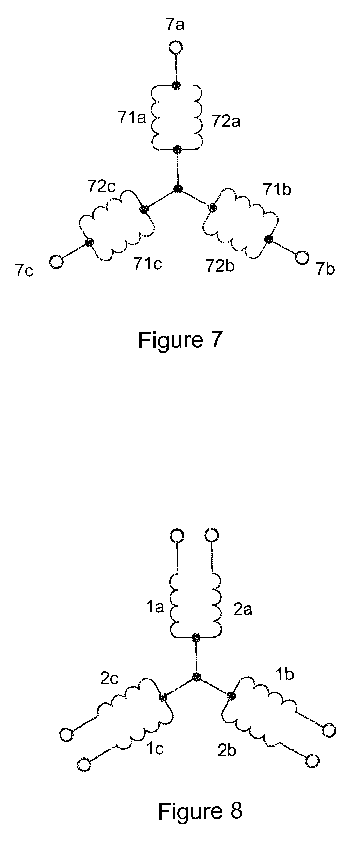

Some known electric machines have parallel windings positioned in a two-fold rotational symmetry for passively dampening a radial movement of the rotor. The radial movement induces a circulating current to parallel-connected windings. The circulating current passively dampens the movement. By separating the parallel-connected windings, an electric machine according to the present disclosure may be produced. Figure 7 shows an exemplary simplified circuit diagram of a known four-pole electric machine winding configuration. Each phase 7a, 7b, and 7c in Figure 7 has a pair of parallel-connected windings 71a and 72a, 71b and 72b, and 71c and 72c, respectively. The parallel-connected windings may be positioned in a two-fold rotational symmetry, as discussed in the previous paragraphs with respect to an electric machine according to the present disclosure.

In order to produce an electric machine according to the present disclosure, the parallel windings may be separated such that each of them can be supplied with a separate phase voltage. If at least one end of each set of the parallel windings is exposed in a connection box, for example, the separation of the parallel windings may be particularly easy to accomplish. Figure 8 shows an exemplary four-pole electric machine according to the present disclosure. The stator windings are divided into two separately-supplied winding portions. The first portion comprises phase windings 1a, 1b, and 1c. The second portion may comprise phases 2a, 2b, and 2c. The electric machine of Figure 8 can be achieved by modifying the electric machine of Figure 7, for example. The physical configuration of Figure 8 may correspond to the exemplary stator of Figure 1 or Figure 4, for example.

The above examples show some implementation approaches for the method according to the present disclosure. However, the electric machines, to which the method according to the present disclosure can be applied, are not limited to the examples described in the description.

The present disclosure also describes an inverter system for controlling the radial force of the rotor of a motor according to the present disclosure. For example, an inverter system may be configured to control a rotation of the rotor with a four-pole (main) magnetic flux component generated to the four-pole stator windings, and to control the radial force of the rotor with a two-pole (auxiliary) magnetic flux component generated to the four-pole stator windings. The radial force may be used for controlling the position/eccentricity of the rotor, for example.

The four-pole magnetic flux (i.e. main magnetic flux component) may be generated by controlling voltages supplied to the three-phase winding portions. The inverter system may comprise one or more inverter bridges, and the inverter system may generate the voltages supplied to the three-phase winding portions by modulating semiconductor switches in the one or more inverter bridges, for example. The voltages supplied to the three-phase winding portions may be controlled on the basis of a single voltage reference representing a common-mode voltage term between the two winding portions. On the basis of the common-mode voltage term, the four-pole magnetic flux component producing torque may be induced. Phase voltages of the two winding portions may be modulated in synchrony in order to minimize common-mode issues caused by conflicting switching states of the switches in the one or more inverter bridges of the inverter system.

The two-pole magnetic flux component (i.e. auxiliary magnetic flux component) may be generated by controlling a voltage difference between the voltages supplied to the three-phase winding portions. A voltage difference term inducing the two-pole magnetic flux component may be generated at a modulation level of the inverter system, for example. When the phase voltages of the two three-phase winding portions are modulated in synchrony, the differential voltage term may be induced by slightly altering switching instants of the modulating switches.

The inverter system may comprise a six-phase inverter, for example. The six-phase inverter may act as the means for separately supplying both winding portions with three-phase voltages. With the six-phase inverter, both winding portions can be supplied with different three-phase voltages.

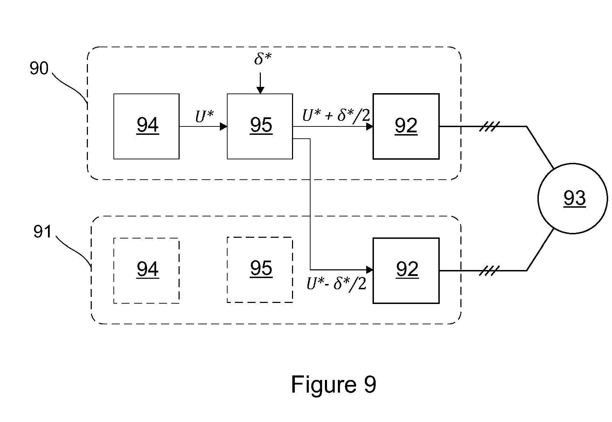

Another approach to controlling the radial force is to use two three-phase inverters. An inverter system according to the present disclosure may comprise two three-phase inverters which act as the means for separately supplying each pole pair with a voltage. The two three-phase inverters may have synchronized modulators. Figure 9 shows a simplified block diagram of an exemplary arrangement according to the present disclosure, where the inverter system comprises two three-phase inverters. Two inverter units 90 and 91 both comprise a three-phase inverter bridge 92. The inverter units may be physically identical. The inverter bridges 92 both drive one driving portion of an electric machine 93 according to the present disclosure. The inverter unit 90 comprises a first control unit 94 for controlling the rotation of a rotor of the electric machine 93. The first control unit 94 generates a modulation reference $U^*$ in order to control the three-phase inverter bridges 92 of both inverter units 90 and 91. If the inverter units 90 and 91 are identical, the first control unit 94 of inverter unit 91 may be disabled.

Before the modulation reference is inputted to both inverter bridges 92, a second control unit 95 alters the modulation reference $U^*$. The second control unit 95 introduces a differential term $\delta^*$ to the modulation reference the inverters 92 receive. Thus, the inverter bridges 92 receive different modulation references $U^*+ \delta^*/2$ and $U^*- \delta^*/2$. The inverter bridges 92 generate output voltages according to their modulation references $U^*+ \delta^*/2$ and $U^*- \delta^*/2$ and, as a result, a four-pole main magnetic flux component and a two-pole auxiliary magnetic flux component are induced.

The present disclosure further describes an arrangement comprising a three-phase electric machine comprising four-pole stator windings with two separately supplied, three-phase winding portions, and an inverter system according to the present disclosure. The electric machine may be an electric machine as described in Figures 1 or 2, for example. The inverter system may comprise a six-phase inverter or two three-phase inverters, for example.

A control scheme for an arrangement according to the present disclosure may depend on the control goal of the arrangement. A control scheme for controlling a position of the rotor may be a PID control or a model-based control, for example. Chiba, Fukao, and Rahman [5], Rodriguez and Santisteban [6], and Ooshima, Kobayashi, and Uddin [7] describe various PID control approaches for controlling the rotor position, for example. Sinervo and Arkkio [8] describe a model-based control approach, for example. Although the implementation of the electric machines and drive systems in these documents may somewhat differ from the electric machine and inverter system according to the present disclosure, the control principles described in these publications apply to the control of an inverter system according to the present disclosure.

Eccentricity of the rotor of an electric machine may generate a non-rotating, six-pole magnetic flux component (i.e. a non-rotating, six-pole spatial density harmonic component of a magnetic flux). Since consecutive harmonic components generate a magnetic pull to the rotor [1], a six-pole magnetic flux component together with the four-pole main magnetic flux component may generate a radial force to the rotor. Because the six-pole magnetic flux component does not rotate, the angle of the four-pole magnetic flux component defines the direction of the radial force [see Equation (1)]. The four-pole magnetic flux component is used for controlling the rotation of the rotor, so controlling the direction of the radial force caused by a six-pole magnetic flux component may not be possible.

However, controlling the magnitude of this force is possible because the magnitude of the six-pole magnetic flux component can be controlled. The magnitude of the six-pole magnetic flux component may be controlled by controlling the common-mode voltage components of the three-phase voltages supplied to the two three-phase portions of an electric machine according to the present disclosure. A difference between the common-mode voltage components of three-phase voltages supplied to the portions generates a six-pole magnetic flux component. By controlling the difference between the common-mode voltage components, the magnitude (including the sign) of the generated six-pole flux component can be adjusted, and a six-pole magnetic flux component induced by the eccentricity of the rotor can be eliminated.

Therefore, an inverter system according to the present disclosure may further be configured to minimize a six-pole field generated by the eccentricity of the rotor by controlling a difference between common-mode voltages of the two three-phase winding portions.

It will be obvious to a person skilled in the art that the inventive concept can be implemented in various ways. The invention and its embodiments are not limited to the examples described above but may vary within the scope of the claims.

REFERENCES

[1] A. Smith and D. Dorrell, "Calculation and measurement of unbalanced magnetic pull in cage induction motors with eccentric rotors. Part I: Analytical model," Proc. IEE Electr. Power Appl., vol. 143, no. 3, pp. 193-201, 1996.

[2] A. Chiba, D. Power, and M. Rahman, "Characteristics of a bearingless induction motor," IEEE Trans. Magn., vol. 27, no. 6, pp. 5199-5201, Nov. 1991.

[3] A. Salazar and R. Stephan, "A bearingless method for induction machines," IEEE Trans. Magn., vol. 29, no. 6, pp. 2965-2967, Nov. 1993.

[4] W. Khoo, "Bridge configured winding for polyphase self-bearing machines," IEEE Trans. Magn., vol. 41, no. 4, pp. 1289-1295, Apr. 2005.

[5] A. Chiba, T. Fukao, and M. Rahman, "Vibration suppression of a flexible shaft with a simplified bearingless induction motor drive," IEEE Trans. Ind. Appl., vol. 44, no. 3, pp. 745-752, May/Jun. 2008.

[6] E. Rodriguez and J. Santisteban, "An improved control system for a split winding bearingless induction motor," IEEE Trans. Ind. Electron., vol. 58, no. 8, pp. 3401-3408, Aug. 2011.

[7] M. Ooshima, S. Kobayashi, and M. Uddin, "Magnetic levitation tests of a bearingless motor based on d-q axis current control," in Proc. IEEE Ind. Appl. Soc. Annu. Meeting, Oct. 2012, pp. 1-7.

[8] A. Sinervo and A. Arkkio, "Rotor Radial Position Control and its Effect on the Total Efficiency of a Bearingless Induction Motor With a Cage Rotor", IEEE Trans. Magn., vol. 50, no. 4, Apr 2014

**Claims**

1. An inverter system for controlling a radial force of a rotor of a three-phase electric machine comprising four-pole stator windings with two separately-supplied, three-phase winding portions that are electrically in a two-fold rotational symmetry, wherein the inverter system is configured to
   control a rotation of the rotor with a four-pole main magnetic flux component generated to the four-pole stator windings, wherein the four-pole main magnetic flux is generated by controlling voltages supplied to the three-phase winding portions, and
   control the radial force of the rotor with a two-pole auxiliary magnetic flux component generated to the four-pole stator windings, wherein the two-pole auxiliary magnetic flux component is generated by controlling a voltage difference between the voltages supplied to the three-phase winding portions.

2. An inverter system according to claim 1, comprising a six-phase inverter which acts as the means for separately supplying both winding portions with three-phase voltages.

3. An inverter system according to claim 1, comprising two three-phase inverters which act as the means for separately supplying each pole pair with a voltage, the two three-phase inverters having synchronized modulators.

4. An inverter system according to any one of the previous claims, wherein the inverter system is further configured to minimize a six-pole magnetic flux component generated by an eccentricity of the rotor by controlling a difference between common-mode voltages of the two three-phase winding portions.

5. An arrangement comprising a three-phase electric machine comprising four-pole stator windings with two separately supplied, three-phase winding portions, and an inverter system according to any one of the previous claims.

6. A method for controlling a radial force of a rotor of a three-phase electric machine comprising four-pole stator windings with two separately supplied, three-phase winding portions that are electrically in a two-fold rotational symmetry, wherein the method comprises
controlling a rotation of the rotor with a four-pole main magnetic flux component generated to the four-pole stator windings, wherein the four-pole main magnetic flux is generated by controlling voltages supplied to the three-phase winding portions, and
controlling the radial force of the rotor with a two-pole auxiliary magnetic flux component generated to the four-pole stator windings, wherein the two-pole auxiliary magnetic flux component is generated by controlling a voltage difference between the voltages supplied to the three-phase winding portions.

Figure 1

Figure 2A

Figure 2B

Figure 3A

Figure 3B

Figure 4

Figure 5

Figure 6

7a

71a 72a

72c 71b

7c 71c 72b 7b

Figure 7

1a 2a

2c 1b

1c 2b

Figure 8

Figure 9

Europäisches
Patentamt

European
Patent Office

Office européen
des brevets

# EUROPEAN SEARCH REPORT

Application Number

EP 16 15 6872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 650 707 A (LIPO THOMAS A [US] ET AL) 22 July 1997 (1997-07-22) * column 4, lines 29-43 * * column 7, lines 3-13 * * figures 2, 8 * ----- | 1-6 | INV. H02P6/10 |
| Y | US 2005/077793 A1 (GARVEY SEAMUS [GB] ET AL) 14 April 2005 (2005-04-14) * paragraphs [0065], [0067], [0106], [0107] * * figures 3, 4, 5, 6, 11, 12 * ----- | 1-6 | |

TECHNICAL FIELDS
SEARCHED     (IPC)

H02P

The present search report has been drawn up for all claims

| Place of search | Date of completion of the search | Examiner |
|---|---|---|
| Munich | 26 August 2016 | Roider, Anton |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

&  : member of the same patent family, corresponding
   document

EPO FORM 1503 03.82 (P04C01)

# EP 3 211 787 A1

## ANNEX TO THE EUROPEAN SEARCH REPORT
## ON EUROPEAN PATENT APPLICATION NO.

EP 16 15 6872

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2016

| Patent document cited in search report | | Publication date | Patent family member(s) | | Publication date |
|---|---|---|---|---|---|
| US 5650707 | A | 22-07-1997 | AU<br>US<br>WO | 6145296 A<br>5650707 A<br>9712438 A1 | 17-04-1997<br>22-07-1997<br>03-04-1997 |
| US 2005077793 | A1 | 14-04-2005 | NONE | | |

For more details about this annex : see Official Journal of the European Patent Office, No. 12/82

EPO FORM P0459

15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. SMITH ; D. DORRELL.** Calculation and measurement of unbalanced magnetic pull in cage induction motors with eccentric rotors. Part I: Analytical model. *Proc. IEE Electr. Power Appl.,* 1996, vol. 143 (3), 193-201
- **A. CHIBA ; D. POWER ; M. RAHMAN.** Characteristics of a bearingless induction motor. *IEEE Trans. Magn.,* November 1991, vol. 27 (6), 5199-5201
- **A. SALAZAR ; R. STEPHAN.** A bearingless method for induction machines. *IEEE Trans. Magn.,* November 1993, vol. 29 (6), 2965-2967
- **W. KHOO.** Bridge configured winding for polyphase self-bearing machines. *IEEE Trans. Magn.,* April 2005, vol. 41 (4), 1289-1295
- **A. CHIBA ; T. FUKAO ; M. RAHMAN.** Vibration suppression of a flexible shaft with a simplified bearingless induction motor drive. *IEEE Trans. Ind. Appl.,* May 2008, vol. 44 (3), 745-752
- **E. RODRIGUEZ ; J. SANTISTEBAN.** An improved control system for a split winding bearingless induction motor. *IEEE Trans. Ind. Electron.,* August 2011, vol. 58 (8), 3401-3408
- **M. OOSHIMA ; S. KOBAYASHI ; M. UDDIN.** Magnetic levitation tests of a bearingless motor based on d-q axis current control. *Proc. IEEE Ind. Appl. Soc. Annu. Meeting,* October 2012, 1-7
- **A. SINERVO ; A. ARKKIO.** Rotor Radial Position Control and its Effect on the Total Efficiency of a Bearingless Induction Motor With a Cage Rotor. *IEEE Trans. Magn.,* April 2014, vol. 50 (4